# EUROPEAN PATENT SPECIFICATION

(11) **EP 1 575 275 B1**
(45) Date of publication and mention of the grant of the patent: **01.07.2009**
(21) Application number: 05101485.0
(22) Date of filing: 25.02.2005
(51) Int. Cl.: H04N 5/225, G03B 19/07, G03B 17/02

(54) **A camera apparatus**
Kameravorrichtung
Dispositif de caméra

(30) Priority: 10.03.2004 KR 2004016191
(43) Date of publication of application: 14.09.2005
(73) Proprietor: SAMSUNG ELECTRONICS CO., LTD., Suwon-si, Gyeonggi-Do 442-742 (KR)
(72) Inventor: KIM, Nam-il, Jangan-gu Suwon-si, Gyeonggi-do (KR)
(74) Representative: Geary, Stuart Lloyd

(56) References cited:
- DE-C1- 19 534 191
- PATENT ABSTRACTS OF JAPAN vol. 014, no. 534 (P-1135), 26 November 1990 (1990-11-26) -& JP 02 226239 A (OLYMPUS OPTICAL CO LTD), 7 September 1990 (1990-09-07)
- PATENT ABSTRACTS OF JAPAN vol. 2002, no. 03, 3 April 2002 (2002-04-03) -& JP 2001 305611 A (CANON INC), 2 November 2001 (2001-11-02)
- PATENT ABSTRACTS OF JAPAN vol. 013, no. 066 (P-828), 15 February 1989 (1989-02-15) -& JP 63 253929 A (ASAHI DENKI SEISAKUSHO:KK), 20 October 1988 (1988-10-20)

## Description

The present invention relates to a camera apparatus comprising a body, a recording button mounted on the body for photographing an image of an object, a zoom button mounted on the body for zooming in on an object, the recording and zoom buttons being received and supported in a button holder and, a guide member mounted on the body to receive and mount the button holder such that the button holder is user-repositionable. Such a camera apparatus is known from JP 2001 305611A.

Cameras can be categorised as digital cameras that record and play back still images, camcorders that record and play back moving pictures, or dual camcorders that can record and play back moving pictures and still pictures. The camera apparatus includes a camera unit having a lens to capture the image of a subject, a recording medium for storing the still or moving images, a viewfinder for enabling a user to view the object captured through the camera unit, a recording button beginning capture/recording of the image, and a zoom button for zooming in on the object.

Both the recording button and the zoom button are typically mounted on one side of the camera apparatus allowing a user to grip and operate the camera using one hand. The mounting position of the buttons, although varying between products, is generally determined in consideration of the average size of an adult hand.

Therefore, users whose hand size is not within a narrow band around the average are inconvenienced by, for example, having to use both hands to grip and operate the camera.

Moreover, if a user does not grip the camera using the hand position intended by the manufacturer, manual operation of both the record and zoom buttons is inconvenient. This may include trembling or shaking of the camera, thereby reducing the quality of the photographed image.

Accordingly, an aspect of the present invention is to provide a camera apparatus enabling a convenient manual operation of buttons regardless of a user's hand size or gripping position.

Various camera apparatus is known which seek to provide a button that is configured to be repositionable. JP 02 226239A discloses a camera apparatus comprising a body, a recording button mounted on the body for photographing an image of an object.

JP 02 226239A and JP 2001 305611A also disclose camera apparatus with user positionable buttons.

A camera apparatus according to the present invention is defined in claim 1 and characterised by a locking unit mounted in the button holder to fix the button holder in a desired position on the guide member, the guide member including a plurality of locking recesses and the locking unit comprises a fastening member and a resilient member to bias the fastening member towards the guide member so that the fastening member locates in one of said recesses to lock the button in a selected one of a plurality of locking positions along the guide member.

Additional preferred and optional features are set forth in the dependent claim appended hereto.

An embodiment of the present invention will now be described, by way of example only, and with reference to the accompanying drawings, in which:
Figure 1 is a perspective view of a camera according to an embodiment of the present invention, a portion of which is partially cut away;
Figure 2 is an exploded perspective view of a separate button unit and guide member of Figure 1;
Figure 3 is an elevation view in partial cross section of the camera cut along a line III-III of Figure 1; and
Figure 4 is a perspective view of the button unit and the guide member of Figure 1 being connected to each other.

Throughout the drawings, like reference numerals will be understood to refer to like parts, components and structures. Well known functions and elements are not described in detail for brevity.

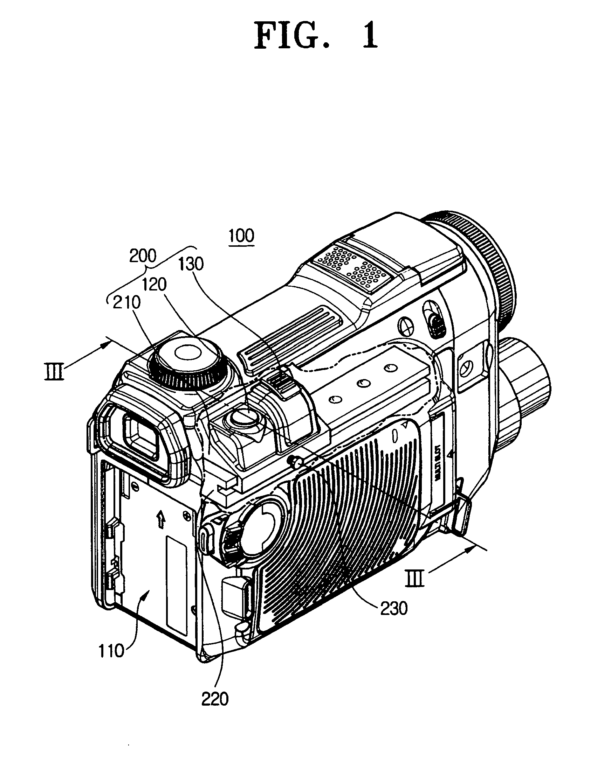

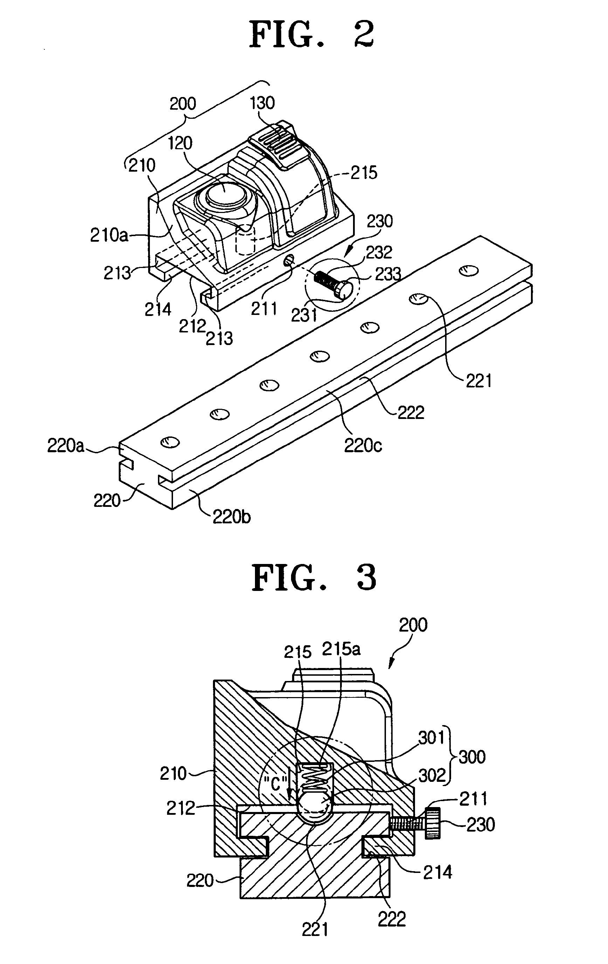

Referring to Figure 1, the camera 100 includes a main body 110, a button unit 200, a guide member 220, a fixing member 230 and a locking unit 300 (Figure 3).

The main body 110 includes a camera lens (not shown) and a recording medium (not shown) located therein. The button unit 200 includes a recording button 120 for photographing an object, a zoom button 130 for zooming in on the object, and a holder 210 for supporting the recording button 120 and the zoom button 130. The holder 210 is mounted on the guide member 220 which is mounted in the main body 110. The holder 210 is configured to slide along the guide member 220 so that a user can control the position of the holder 210. This allows convenient operation of the recording button 120 and the zoom button 130 mounted on the holder 210 in dependence on the user's hand size and/or position. The fixing member 230 is mounted on the flank of the holder 210, and the locking unit 300 (Figure 3) secures the button unit 200 to the guide member 220. The recording button 120 and the zoom button 130 are connected to the camera's electronic circuitry (not shown) located in the main body 110 in a known manner. A typical manner is using lead lines and/or conductive strips, located on the back surface of the holder 210.

Referring to Figure 2, the holder 210 has a slanted upper surface 210a for convenient operation of the recording button 120 and the zoom button 130. Protrusions 214 extend inwardly from lower parts of sides 213 of the holder which are opposite each other. The protrusions 214 are spaced a predetermined distance from the bottom 212 of the holder 210 such that an upper part 220a of the guide member 220 is inserted in the space defined by the protrusions and the bottom 212 of the holder 210. On the bottom 212 of the holder 210, a locking unit 300 receiving recess 215 is formed upwardly therein to receive the locking unit 300 (Figure 3). A tap hole 211 is formed in one flank of the holder 210 so that the fixing member 230 may be inserted.

The fixing member 230 has a handle part 231 allowing operation by a user and an inserting part 232 which is to be inserted in the tap hole 211 of the holder 210. The handle part 231 has a rough edge 233 which can be gripped by the user and has prominences and depressions to prevent sliding of the user's hand when rotating the handle part 231. The inserting part 232 is a bolt, therefore, as the user rotates the handle part 231 in the tap hole 211, the inserting part 232 enters the tap hole 211, to contact a side surface 220c of the guide member 220. In this embodiment, the fixing member 230 is inserted into the holder 210, however the fixing member 230 can be designed in various ways to fix the holder 210, for example, the fixing member 230 may be formed as a one-touch type having a spring and a button or may secure the holder 210 from a flank side of the holder 210 instead of being inserted into the holder 210.

The guide member 220 has guide grooves 222 at both sides thereof. The guide member 220 is divided into the upper part 220a and a lower part 220b, as shown in Figure 2. A plurality of locking recesses 221 are formed on a top surface of the guide member 220 at regular intervals. The locking recesses 221 are formed at short intervals for minute adjustments of the holder 210 position.

The locking unit 300 includes a resilient member 301 and a fastening member. Referring to Figure 3, the resilient member is preferably a coil spring 301 and the fastening member is preferably a spherical ball 302. The locking unit 300 is mounted in the locking unit receiving recess 215 formed on the bottom 212 of the holder 210 of the button unit 200. The coil spring 301 is fixed on an upper surface 215a of the locking unit receiving recess 215, and the ball 302 is attached to one end of the coil spring 301. The coil spring 301 biases the ball 302 toward the guide member 220, in a direction indicated by the arrow "C" of Figure 3 to maintain tight contact of the ball 302 with the guide member 220.

The protrusions 214 on the holder 210 are located in the guide grooves 222, thereby engaging the guide member 220 with the button unit 200. The fixing member 230 presses the side surface 220c (Figure 2) of the guide member 220 as the fixing member passes through the tap hole 211 of the holder 210, thereby securing the button unit 200 to the guide member 220. The locking unit 300 is locked by the locking recess 221.

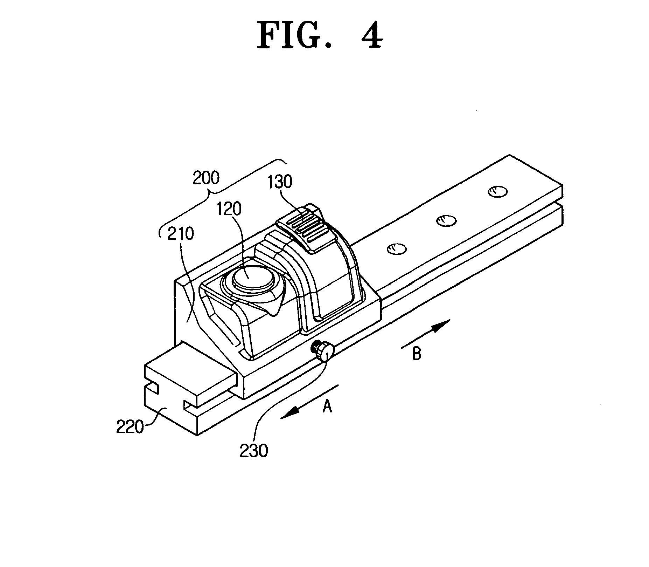

Referring to Figure 4, when the user operates the recording button 120 and the zoom button 130 while gripping the camera 100 with one hand, the user can control the position of the button unit 200 by moving the button unit 200 in a direction indicated by arrow "A" or in a direction indicated by arrow "B". This position will be determined in accordance with the user's hand size. In other words, if the user's hand is relatively small, the user may move the button unit 200 in the direction indicated by arrow "A", and if the user's hand is relatively large, the user may move the button unit 200 in the direction indicated by arrow "B".

In order to move the button unit 200 when locked in place, the fixing member 230 is rotated anticlockwise first to disengage the inserting part 232 from the guide member 220. Then, the button unit 200 is slid in either direction "A" or "B". As the button unit 200 slides along the guide member 220, the ball 302 (Figure 3) which was located in one locking recess 221 (Figure 2) of the guide member 220 disengages from the recess and is slid along the smooth surface of the guide member 220 with the button unit 200. When the ball 302 is over a neighbouring recess, the ball 302 is forced therein by the spring 215a. Accordingly, the user moves the button unit 200 to a desired position.

Once the button unit 200 is located in the desired position, the handle part 231 of the fixing member 230 is rotated clockwise to secure the inserting part 232 against the side surface 220c (Figure 2) of the guide member 220, as shown in Figure 3, thereby fixing the button unit 200 to the guide member 220.

## Claims

1. A camera apparatus comprising a body (110), a recording button (120) mounted on the body (110) for photographing an image of an object, a zoom button (130) mounted on the body (110) for zooming in on an object, the recording and zoom buttons (120,130) being received and supported in a button holder (210) and, a guide member (220) mounted on the body (110) to receive and mount the button holder (210) such that the button holder (210) is user-repositionable and configured to slide along the guide member (220) **characterised by** a locking unit (300) mounted in the button holder (210) to secure the button holder (210) in a desired position on the guide member (220), the guide member (220) including a plurality of locking recesses (221) and the locking unit (300) comprises a fastening member (302) and a resilient member (301) to bias the fastening member (302) towards the guide member so that the fastening member (302) locates in one of said recesses (221) to lock the button in a selected one of a plurality of locking positions along the guide member (220).

2. A camera apparatus according to claim 1, wherein the main body (110) has an upper surface and the recording and zoom buttons (120,130) are on the upper surface of the main body (110).

3. A camera apparatus according to claim 1 or 2, wherein the button holder (210) has a protrusion (214) and the guide member (220) has a guide groove (222) disposed at both sides thereof adapted to receive the protrusion (214) to guide movement of the button holder (210) on the guide member (220).

4. A camera apparatus according to claim 3, wherein the button holder (210) has a locking unit (300) receiving recess (215) in a bottom surface thereof, and the locking unit (300) is mounted within the locking unit receiving recess (215).

5. A camera apparatus according to any preceding claim, wherein the resilient member (301) is a coil spring.

6. A camera apparatus according to any preceding claim, wherein the fastening member (302) is substantially spherical.

7. A camera apparatus according to any preceding claim, wherein a fixing member (230) fixes the button holder (210) to the guide member (220).

8. A camera apparatus according to claim 7, wherein the button holder (210) has a tap hole (211) and the fixing member (230) has an inserting part (232) adapted to be inserted in the tap hole (211), the button holder (210) being fixed to the guide member (220) by the inserting part (232) inserted into the tap hole (211) that contacts the guide member (220).

9. A camera apparatus according to claim 8, wherein a handle part (231) of the fixing member (230) facilitates insertion and removal of the fixing member (230) in the tap hole (211).

10. A camera apparatus according to any preceding claim, wherein the guide member (220) is substantially H-shaped.

11. A camera apparatus according to claim 10, wherein the guide member (220) has an upper portion (220a) and a lower portion (220b) with a pair of grooves (222) formed therebetween.

12. A camera apparatus according to any preceding claim, wherein the resilient member (301) has a first end secured to the button holder (210) and a second end to which the fastening member (302) is secured.

## Patentansprüche

1. Kameravorrichtung, die Folgendes umfasst: ein Gehäuse (110), eine am Gehäuse (110) montierte Aufnahmetaste (120) zum Fotografieren eines Bildes eines Objekts, eine am Gehäuse (110) montierte Zoom-Taste (130) zum Heranzoomen eines Objekts, wobei die Aufnahme- und die Zoom-Taste (120, 130) in einem Tastenhalter (210) aufgenommen und getragen werden, und ein am Gehäuse (110) montiertes Führungselement (220) zum Aufnehmen und Montieren des Tastenhalters (210), so dass der Tastenhalter (210) vom Benutzer umpositioniert und so konfiguriert werden kann, dass er an dem Führungselement (220) entlang gleitet, **gekennzeichnet durch** eine im Tastenhalter (210) montierte Arretierungseinheit (300) zum Befestigen des Tastenhalters (210) in einer gewünschten Position an dem Führungselement (220), wobei das Führungselement (220) mehrere Arretierungsvertiefungen (221) aufweist und die Arretierungseinheit (300) ein Feststellelement (302) und ein federndes Element (301) umfasst, um das Feststellelement (302) in Richtung auf das Führungselement vorzuspannen, so dass das Feststellelement (302) in einer der genannten Vertiefungen (221) platziert wird, um die Taste in einer ausgewählten der mehreren Arretierungspositionen entlang dem Führungselement (220) zu arretieren.

2. Kameravorrichtung nach Anspruch 1, wobei das Hauptgehäuse (110) eine Oberseite hat und die Aufnahme- und die Zoom-Taste (120, 130) sich auf der Oberseite des Hauptgehäuses (110) befinden.

3. Kameravorrichtung nach Anspruch 1 oder 2, wobei der Tastenhalter (210) einen Vorsprung (214) hat und das Führungselement (220) eine Führungsrille (222) hat, die auf beiden Seiten davon angeordnet und so gestaltet ist, dass sie den Vorsprung (214) aufnimmt, um die Bewegung des Tastenhalters (210) auf dem Führungselement (220) zu führen.

4. Kameravorrichtung nach Anspruch 3, wobei der Tastenhalter (210) in seiner Unterseite eine Aussparung (215) zur Aufnahme der Arretierungseinheit (300) hat und die Arretierungseinheit (300) in der Arretierungseinheit-Aufnahmeaussparung (215) montiert ist.

5. Kameravorrichtung nach einem der vorherigen Ansprüche, wobei das federnde Element (301) eine Spiralfeder ist.

6. Kameravorrichtung nach einem der vorherigen Ansprüche, wobei das Feststellelement (302) im Wesentlichen sphärisch ist.

7. Kameravorrichtung nach einem der vorherigen Ansprüche, wobei ein Fixierelement (230) den Tastenhalter (210) an dem Führungselement (220) fixiert.

8. Kameravorrichtung nach Anspruch 7, wobei der Tastenhalter (210) ein Gewindeloch (211) hat und das Fixierelement (230) einen Einführungsteil (232) zum Einführen in das Gewindeloch (211) hat, wobei der Tastenhalter (210) an dem Führungselement (220) fixiert wird, wenn der in das Gewindeloch (211) eingeführte Einführungsteil (232) mit dem Führungselement (220) in Kontakt kommt.

9. Kameravorrichtung nach Anspruch 8, wobei ein Griffteil (231) des Fixierelementes (230) das Einführen und Herausziehen des Fixierelementes (230) in das/aus dem Gewindeloch (211) erleichtert.

10. Kameravorrichtung nach einem der vorherigen Ansprüche, wobei das Führungselement (220) im Wesentlichen H-förmig ist.

11. Kameravorrichtung nach Anspruch 10, wobei das Führungselement (220) einen oberen Abschnitt (220a) und einen unteren Abschnitt (220b) mit einem Paar dazwischen ausgebildeten Rillen (222) hat.

12. Kameravorrichtung nach einem der vorherigen Ansprüche, wobei das federnde Element (301) ein am Tastenhalter (210) befestigtes erstes Ende und ein am Feststellelement (302) befestigtes zweites Ende hat.

## Revendications

1. Caméra comprenant un corps (110), un bouton d'enregistrement (120) monté sur le corps (110) pour photographier une image d'un objet, un bouton de zoom (130) monté sur le corps (110) pour faire un zoom avant sur un objet, les boutons d'enregistrement et de zoom (120, 130) étant reçus et supportés dans un porte-boutons (210), et un élément de guidage (220) monté sur le corps (110) pour recevoir et monter le porte-boutons (210) de telle sorte que le porte-boutons (210) soit repositionnable par l'utilisateur et configuré pour coulisser le long de l'élément de guidage (220), **caractérisé par** un dispositif de verrouillage (300) monté dans le porte-boutons (210) pour fixer le porte-boutons (210) dans une position voulue sur l'élément de guidage (220), l'élément de guidage (220) comprenant une pluralité de creux de verrouillage (221) et le dispositif de verrouillage (300) comprend un élément de fixation (302) et un élément flexible (301) pour rappeler l'élément de fixation (302) vers l'élément de guidage de telle sorte que l'élément de fixation (302) se positionne dans l'un desdits creux (221) pour verrouiller le bouton dans une position sélectionnée d'une pluralité de positions de verrouillage le long de l'élément de guidage (220).

2. Caméra selon la revendication 1, dans laquelle le corps principal (110) a une surface supérieure et les boutons d'enregistrement et de zoom (120, 130) sont sur la surface supérieure du corps principal (110).

3. Caméra selon la revendication 1 ou 2, dans laquelle le porte-boutons (210) comporte une saillie (214) et l'élément de guidage (220) a une rainure de guidage (222) disposée sur ses deux côtés, adaptée pour recevoir la saillie (214) afin de guider le mouvement du porte-boutons (210) sur l'élément de guidage (220).

4. Caméra selon la revendication 3, dans laquelle le porte-boutons (210) a un creux (215) recevant le dispositif de verrouillage (300) dans sa surface inférieure, et le dispositif de verrouillage (300) est monté dans le creux (215) recevant le dispositif de verrouillage.

5. Caméra selon l'une quelconque des revendications précédentes, dans laquelle l'élément élastique (301) est un ressort hélicoïdal.

6. Caméra selon l'une quelconque des revendications précédentes, dans laquelle l'élément de fixation (302) est sensiblement sphérique.

7. Caméra selon l'une quelconque des revendications précédentes, dans laquelle un élément de fixation (230) fixe le porte-boutons (210) à l'élément de guidage (220).

8. Caméra selon la revendication 7, dans laquelle le porte-boutons (210) comporte un trou taraudé (211) et l'élément de fixation (230) a une partie d'insertion (232) adaptée pour être insérée dans le trou taraudé (211), le porte-boutons (210) étant fixé à l'élément de guidage (220) par la partie d'insertion (232) insérée dans le trou taraudé (211) qui est en contact avec l'élément de guidage (220).

9. Caméra selon la revendication 8, dans laquelle une partie formant poignée (231) de l'élément de fixation (230) facilite l'insertion et la dépose de l'élément de fixation (230) dans le trou taraudé (211).

10. Caméra selon l'une quelconque des revendications précédentes, dans laquelle l'élément de guidage (220) est sensiblement en forme de H.

11. Caméra selon la revendication 10, dans laquelle l'élément de guidage (220) a une partie supérieure (220a) et une partie inférieure (220b) entre lesquelles est formée une paire de rainures (222).

12. Caméra selon l'une quelconque des revendications précédentes, dans laquelle l'élément élastique (301) a une première extrémité fixée au porte-boutons (210) et une deuxième extrémité à laquelle est fixé l'élément de fixation (302).
